(19) Europäisches Patentamt
European Patent Office
Office européen des brevets

(11) **EP 3 277 869 B1**

(12) **FASCICULE DE BREVET EUROPEEN**

(45) Date de publication et mention
de la délivrance du brevet:
**09.06.2021 Bulletin 2021/23**

(51) Int Cl.:
***D02G 3/48*** *(2006.01)*

(21) Numéro de dépôt: **16714818.8**

(22) Date de dépôt: **25.03.2016**

(86) Numéro de dépôt international:
**PCT/EP2016/056702**

(87) Numéro de publication internationale:
**WO 2016/156263 (06.10.2016 Gazette 2016/40)**

(54) **ÉLÉMENT DE RENFORT HYBRIDE À TORSIONS DIFFÉRENCIÉES**

HYBRIDES VERSTÄRKUNGSELEMENT MIT DIFFERENTIALVERDREHUNG

HYBRID REINFORCING ELEMENT WITH DIFFERENTIAL TWIST

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.03.2015 FR 1552699**

(43) Date de publication de la demande:
**07.02.2018 Bulletin 2018/06**

(73) Titulaire: **Compagnie Générale des
Etablissements Michelin
63000 Clermont-Ferrand (FR)**

(72) Inventeurs:
• **VALLET, Solenne
63040 Clermont-Ferrand Cedex 9 (FR)**
• **GUILLAUMAIN, Jérémy
63040 Clermont-Ferrand Cedex 9 (FR)**

(74) Mandataire: **Desbordes, Guillaume
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 0 329 593       EP-A1- 2 551 127
DE-A1-102008 037 615   US-A- 3 603 071
US-A- 4 155 394        US-A- 4 234 030
US-A- 5 558 144**

EP 3 277 869 B1

**Description**

L'invention concerne un élément de renfort, un pneumatique, un produit semi-fini ainsi qu'un procédé de fabrication d'un tel élément de renfort.

Les éléments de renfort textiles, fabriqués à partir de monofilaments ou fibres textiles continues telles que des fibres en polyester, nylon, cellulose ou aramide, jouent un rôle important dans les pneumatiques, y compris dans les pneumatiques à haute performance homologués pour rouler à très haute vitesse. Pour répondre aux exigences des pneumatiques, les éléments de renforts doivent présenter une forte résistance à la rupture, un module en extension élevé, une excellente endurance en fatigue et enfin une bonne adhésion aux matrices de caoutchouc ou autres polymères qu'ils sont susceptibles de renforcer.

On connait de l'état de la technique des éléments de renfort constitués de deux brins multifilamentaires constitué chacun de monofilaments textiles élémentaires. Les deux brins de monofilaments sont enroulés l'un autour de l'autre par retordage pour former un retors. Chaque brin comprenant les monofilaments textiles est généralement appelé filé ou surtors selon l'étape du procédé de fabrication.

Le procédé de fabrication de ces éléments de renforts est également bien connu de l'état de la technique. Au cours d'une première étape, chaque filé de monofilaments textiles (en anglais « *yarn* ») est tout d'abord individuellement tordu sur lui-même (selon une torsion initiale R1' et R2' avec R1'=R2') dans une direction donnée D' (respectivement sens S ou Z, selon une nomenclature reconnue désignant l'orientation des spires selon la barre transversale d'un S ou d'un Z), pour former un brin ou surtors (en anglais « *strand* ») dans lequel les monofilaments textiles se voient imposés une déformation en hélice autour de l'axe du brin. Puis, au cours d'une seconde étape, les deux brins, qu'ils comportent des monofilaments réalisés dans des matériau identiques ou différents (cas d'éléments de renforts dits hybrides ou composites), sont ensuite retordus ensemble selon une torsion finale R3 telle que R3=R1'=R2' en direction D3 opposée à la direction D' (respectivement sens Z ou S), pour l'obtention de l'élément de renfort câblé (en anglais « *cord* »). Cet élément de renfort est dit équilibré en torsion car les deux brins présentent, dans l'élément de renfort final, la même torsion résiduelle car R1'=R2'. Cette torsion résiduelle est nulle ou sensiblement nulle car R3=R1'=R2' et la direction D' est opposée à la direction D3.

Le rôle du retordage est d'adapter les propriétés du matériau afin de créer la cohésion transversale de l'élément de renfort, d'accroître sa tenue en fatigue et aussi d'améliorer l'adhésion avec la matrice renforcée.

De tels éléments de renforts, leurs constructions et procédés de fabrication sont bien connus de l'homme du métier. Ils ont été décrits en détail dans un grand nombre de documents, par exemple EP021485, EP220642, EP225391, EP335588, EP467585, US3419 060, US3977172, US4155394, US5558144, WO97/06294 ou EP848767, ou plus récemment WO2012/104279, WO2012/146612, WO2014/057082.

D'autres éléments de renfort sont connus dans US3603071, DE102008037615 et US4234030.

Pour pouvoir renforcer des pneumatiques ou des produits semi-finis comprenant ces éléments de renforts, l'endurance ou résistance à la fatigue (en extension, flexion, compression) et la force à rupture de ces éléments de renfort sont primordiales. On sait que de manière générale, pour un matériau donné, l'endurance est d'autant plus élevée que les torsions employées sont importantes, mais qu'en contrepartie, la force à la rupture en extension (appelée ténacité lorsqu'elle est ramenée à l'unité de poids) diminue inexorablement lorsqu'augmente la torsion, ce qui bien entendu est pénalisant du point de vue du renforcement.

Aussi, les concepteurs d'éléments de renfort, comme les fabricants de pneumatiques, sont en permanence à la recherche d'éléments de renfort dont les propriétés mécaniques en endurance et en force à rupture, pour un matériau et une torsion donnés, pourraient être améliorées.

A cet effet, l'invention a pour objet un élément de renfort comprenant un unique brin de monofilaments textiles à haut module et un unique brin de monofilaments textiles à bas module, enroulés l'un autour de l'autre selon une direction D3 avec une torsion R3, le brin de monofilaments textiles à haut module présentant une torsion résiduelle R1 selon la direction D1, le brin de monofilaments textiles à bas module présentant une éventuelle torsion résiduelle R2 selon la direction D2, les torsions résiduelles R1 et R2 étant telles que :

- R1>R2 dans le cas où R2 est sensiblement non-nulle
- R1est sensiblement non nulle dans le cas où R2 est sensiblement nulle.

L'élément de renfort selon l'invention présente une force à rupture équivalente et une endurance améliorée par rapport à celles d'un élément de renfort équilibré.

Comme rappelée ci-dessus, dans les éléments de renfort de l'état de la technique, l'augmentation de la torsion R3 permet d'augmenter l'endurance mais au détriment de la force à rupture. Au contraire, dans l'élément de renfort selon l'invention, la perte de force à rupture liée à l'augmentation de la torsion R3 est compensée par la torsion résiduelle R1 strictement supérieure à la torsion résiduelle R2 comme le démontre les résultats des essais comparatifs décrits ci-dessous.

Par torsion résiduelle sensiblement nulle, on entend que la torsion résiduelle est strictement inférieure à 2,5% de la torsion R3. Par torsion résiduelle sensiblement non nulle, on entend que la torsion résiduelle est supérieure ou égale à 2,5% de la torsion R3.

Par brin de monofilaments textiles à haut module, on entend un brin présentant un module dit final strictement supérieur à 25 cN/tex. Par opposition, par brin de monofilaments textiles à bas module, on entend un brin présentant un module dit final inférieur ou égal à 25 cN/tex. Cette définition s'applique aussi bien aux brins écrus, c'est-à-dire dépourvus de colle, qu'aux brins encollés, c'est-à-dire recouverts d'une couche de colle. Dans le cas des brins encollés, cette définition s'applique indifféremment aussi bien aux brins issus directement de fabrication qu'aux brins issus d'éléments de renforts, qu'ils soient issus directement de fabrication ou extraits de produit semi-fini ou de pneumatique.

Le module final est mesuré à partir d'une courbe force-allongement obtenue à 20°C de manière connue à l'aide d'une machine de traction « INSTRON » munie de pinces à embarrage du type « 4D » (pour force rupture inférieure à 100 daN) ou « 4E » (pour force rupture au moins égale à 100 daN). Le brin testé subit une traction sur une longueur initiale de 400 mm pour les pinces 4D et 800 mm pour les pinces 4E, à une vitesse nominale de 200 mm/min. Tous les résultats donnés sont une moyenne de 10 mesures.

Préalablement à la traction du brin mesuré, on applique une torsion préalable, dite « torsion de protection », égale à 100 tours par mètre à l'exception des brins en aramide et dont le titre est supérieur ou égal à 330 tex et pour lesquels la torsion préalable est égale à 80 tours par mètre.

Dans le cas d'une courbe force-allongement présentant une allure générale sensiblement linéaire, le module final est défini comme la pente au point correspondant à 80% de la force à rupture de la courbe force-allongement divisé par le titre du brin. Dans le cas d'une courbe force-allongement présentant une allure générale non-sensiblement linéaire, par exemple comportant un ou plusieurs points d'inflexions, le module final est défini comme la pente entre deux points A et B de la courbe force-allongement divisé par le titre du brin, le point A correspondant à 40% de la force à rupture du brin et le point B correspondant à 60% de la force à rupture du brin.

Le titre (ou densité linéique) du brin est déterminé selon la norme ASTM D1423. Le titre est donné en tex (poids en grammes de 1000 m de produit - rappel: 0, 111 tex égal à 1 denier).

Chaque brin de monofilaments textiles comprend une pluralité de monofilaments élémentaires textiles, éventuellement entremêlés les uns avec les autres. Chaque brin comprend entre 50 et 2000 monofilaments.

Dans le cas d'un élément de renfort issu directement de fabrication ou extrait d'un produit semi-fini ou d'un pneumatique, chaque torsion résiduelle R1, R2 est déterminée en détordant l'élément de renfort, ce qui permet d'obtenir R3, puis en détordant chaque brin, ce qui permet d'obtenir R1 et R2. Chaque torsion R1, R2, R3 est déterminée conformément à la norme ASTM D 885/D 885MA de janvier 2010 (paragraphe 30), par exemple à l'aide d'un torsiomètre.

Dans le mode de réalisation de l'invention dans lequel R2 est sensiblement nulle, l'invention permet d'améliorer significativement la force à rupture tout en maintenant une endurance équivalente à celle d'un élément de renfort équilibré présentant une torsion R3 identique à l'invention.

Dans le mode de réalisation de l'invention dans lequel R2 est sensiblement non nulle, l'invention permet d'améliorer significativement l'endurance tout en maintenant une force à rupture équivalente à celle d'un élément de renfort équilibré présentant une torsion R3 inférieure à l'invention.

Avantageusement, le module final du brin de monofilaments textiles à haut module est supérieur ou égal à 30 cN/tex, de préférence à 35 cN/tex et plus préférentiellement à 40 cN/tex.

Avantageusement, le module final du brin de monofilaments textiles à bas module est inférieur ou égal à 20 cN/tex, de préférence à 15 cN/tex et plus préférentiellement à 10 cN/tex.

Avantageusement, le rapport du module final du brin de monofilaments textiles à haut module sur le module final du brin de monofilaments textiles à bas module est supérieur ou égal à 2, de préférence à 5 et plus préférentiellement à 7. Dans les modes de réalisation avantageux de l'invention, ce rapport est inférieur ou égal à 15 et de préférence à 10.

Dans la présente demande, on entend par textile ou matériau textile, de manière très générale, tout matériau en une matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Bien que des matériaux en matière non polymérique (par exemple en matière minérale telle que du verre ou en matière organique non polymérique telle que carbone) soient compris dans la définition de matériau textile, l'invention est préférentiellement mise en œuvre avec des matériaux en matière polymérique, tant du type thermoplastique que du type non thermoplastique.

A titre d'exemples de matières polymériques, du type thermoplastiques ou non, on citera par exemple les celluloses, notamment la rayonne, les alcools polyvinyliques (en abrégé « PVA »), les polycétones, les aramides (polyamides aromatiques), les polyesters aromatiques, les polybenzazoles (en abrégé « PBO »), les polyimides, les polyesters, notamment ceux choisis parmi PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Dans un mode de réalisation, dans le cas où R2 est sensiblement non-nulle, les directions D1 et D2 sont identiques.

Avantageusement, les directions D1, D2 et D3 sont identiques dans le cas où R2 est sensiblement non-nulle et les directions D1 et D3 sont identiques dans le cas où R2 est sensiblement nulle. On a ainsi un procédé de fabrication plus rapide et moins coûteux. En effet, on réduit les torsions R1' et R2' à appliquer à chaque brin au strict nécessaire. En effet, dans ce mode de réalisation, les torsions résiduelles R1 et R2 proviennent de la consommation totale des torsions R1' et R2' par la torsion finale R3 contrairement à un procédé dans lequel les torsions R1' et R2' seraient supérieures (ou égale) à R3 et dans lequel les torsions résiduelles R1 et R2 proviendraient du surplus de torsions R1' et R2'.

Dans un mode de réalisation préféré, les monofilaments textiles à haut module sont en polyamide aromatique, de préférence en aramide.

Par monofilament en aramide, on rappelle de manière bien connue qu'il s'agit d'un monofilament de macromolécules linéaires formées de groupes aromatiques liés entre eux par des liaisons amides dont au moins 85 % sont directement liées à deux noyaux aromatiques, et plus particulièrement de fibres en poly(p-phénylène téréphtalamide) (ou PPTA), fabriquées depuis fort longtemps à partir de compositions de filage optiquement anisotropes.

Dans un mode de réalisation préféré, les monofilaments à bas module sont en un matériau sélectionné parmi les celluloses, les alcools polyvinyliques, les polycétones, les polyamides aliphatiques, les polyesters, les polybenzazoles, les polyimides et les mélanges de monofilaments de ces matériaux, de préférence sélectionné parmi les polyamides aliphatiques, les polyesters et les mélanges de monofilaments de ces matériaux.

Par monofilament en polyester, on rappelle de manière bien connue qu'il s'agit d'un monofilament de macromolécules linéaires formées de groupes liés entre eux par des liaisons esters. Les polyesters sont fabriqués par polycondensation par estérification entre un diacide carboxylique, ou de l'un de ses dérivés, et un diol. Par exemple, le polyéthylène téréphtalate peut être fabriqué par polycondensation de l'acide téréphtalique et de l'éthylène glycol.

Par monofilament en nylon, on rappelle de manière bien connue qu'il s'agit d'un monofilament de macromolécules obtenue à partir d'une chaine synthétique polyamide dans laquelle les liaisons amides sont liées directement à un ou plusieurs groupement aliphatique ou cyclo-aliphatique. Un exemple de nylon est le poly-(hexaméthylène adipamide).

De manière bien connue de l'homme du métier, les torsions peuvent être mesurées et exprimées de deux manières différentes, soit et de manière simple en nombre de tours par mètre (t/m), soit et ce qui est plus rigoureux lorsqu'on souhaite comparer des matériaux de natures (masses volumiques) et/ou de titres différents, en angle d'hélice des monofilaments ou ce qui est équivalent sous forme d'un facteur de torsion K.

La torsion R3 va de 200 à 450 tours par mètre, de préférence de 250 à 400 tours par mètre. La torsion R3 pilote l'endurance de l'élément de renfort. Ainsi, en fonction de l'endurance souhaitée, on peut choisir la torsion R3 adaptée. Plus la torsion R3 est élevée, meilleure est l'endurance. Ainsi, on choisira plus préférentiellement une torsion R3 allant de 280 à 400 tours par mètre.

Avantageusement, l'élément de renfort présente un facteur de torsion allant de 130 à 200, de préférence de 140 à 190. Un tel facteur de torsion permet d'obtenir un élément de renfort endurant et présentant une force à rupture élevée et dans lequel la torsion et les titres des brins sont compatibles avec des cadences de fabrication élevées.

Le facteur de torsion K de l'élément de renfort est lié à la torsion R3 de l'élément de renfort selon la relation connue qui suit :

$$K = (\text{Torsion R3}) \times [(\text{Titre T3} / (1000.\rho3)]^{1/2}$$

dans laquelle la torsion R3 est exprimée en tours par mètre (t/m), le titre T3=T1+T2 est exprimé en tex (poids en gramme de 1000 mètres), et enfin $\rho3$ est la densité ou masse volumique (en g/cm$^3$) du matériau constitutif de l'élément de renfort (par exemple, environ 1,50 g/cm$^3$ pour la cellulose, 1,44 g/cm$^3$ pour l'aramide, 1,38 g/cm$^3$ pour un polyester tel que PET, 1,14 g/cm$^3$ pour le nylon). Dans le cas d'un élément de renfort hybride de l'invention, $\rho3$ est bien entendu une moyenne des densités $\rho1$ et $\rho2$ des brins de monofilaments haut module et bas module pondérée par les titres respectifs T1 et T2 de ces brins : $\rho3=(\rho1.T1+\rho2.T2)/(T1+T2)$

Avantageusement, R1 va de 10 à 150 tours par mètre, de préférence de 20 à 120 tours par mètre et plus préférentiellement de 50 à 110 tours par mètre. Pour une torsion résiduelle R1 trop élevée, on obtiendrait un module de l'élément de renfort trop élevé, notamment aux faibles allongements, ce qui induirait des problèmes lors du procédé de fabrication du pneumatique. Au contraire, une torsion résiduelle R1 trop faible ne permet pas de compenser la perte de force à rupture provenant de la torsion R3 apportant l'endurance.

Dans le mode de réalisation dans lequel R2 est sensiblement non nulle, R2 va de 10 à 100 tours par mètre, de préférence de 15 à 75 tours par mètre et plus préférentiellement de 20 à 60 tours par mètre.

Le rapport R1/R3 va de 0,05 à 0,45, de préférence de 0,10 à 0,40, préférentiellement de 0,13 à 0,40, plus préférentiellement de 0,13 à 0,36 et encore plus préférentiellement de 0,20 à 0,35. De tels rapports R1/R3 permettent d'obtenir, pour une torsion R3 donnée, une bonne endurance de l'élément de renfort et une force à rupture satisfaisante, tout en conservant un allongement à rupture suffisant pour ne pas induire de problèmes lors du procédé de fabrication du pneumatique, notamment lors de la conformation du pneumatique.

Avantageusement, le produit R1.R3 est supérieur ou égal à 3000, de préférence à 15000, préférentiellement à 30000 et encore plus préférentiellement à 44000. En effet, plus R3 est élevée, meilleure est l'endurance de l'élément de renfort. Plus R1' est faible, et donc R1 est élevée, meilleure est la force à rupture. Ainsi, plus élevée est la valeur du produit R1.R3, meilleurs sont à la fois l'endurance et la force à rupture de l'élément de renfort. Toutefois, plus R3 est élevée, plus les risques de dispersion de la valeur de la force à rupture des éléments de renfort sont élevés. Ainsi, avantageusement, le produit R1.R3 est inférieur ou égal à 48000. En limitant la valeur du produit R1.R3 à 48000, on réduit les risques de variabilité industrielle de la force à rupture.

Avantageusement, le rapport R3/R2 et R3 vérifient R3/R2 va de 0,10 à 10,50 et R3 va de 200 à 450 tours par mètre, de préférence R3/R2 va de 2,00 à 8,25 et R3 va de 250 à 400 tours par mètre, préférentiellement R3/R2 va de 2,00 à 7,10 et R3 va de 280 à 400 tours par mètre. Encore plus préférentiellement, R3/R2 et R3 vérifient R3/R2 va de 3,20 à 8,75 et R3 va de 235 à 375 tours par mètre. Dans les intervalles R3/R2 et pour les valeurs R3 décrits ci-dessus, on améliore le compromis force à rupture/endurance.

Avantageusement, le rapport R1/R2 va de 1,90 à 10,00, de préférence de 1,90 à 5,00 et plus préférentiellement de 1,90 à 2,50.

Dans un mode de réalisation, le titre T1 du brin de monofilaments textiles à haut module va de 90 à 400 tex, de préférence de 100 à 350 tex et plus préférentiellement de 140 à 210 tex.

Dans un autre mode de réalisation, le titre T2 du brin de monofilaments textiles à bas module va de 80 à 350 tex, de préférence de 90 à 290 tex et plus préférentiellement de 120 à 190 tex bornes incluses.

De tels titres T1 et T2 sont compatibles avec une utilisation en pneumatique. Des titres plus faibles ne présenteraient pas une force à rupture suffisante alors que des titres plus élevées conduiraient à des éléments de renfort trop gros et difficilement utilisable en pneumatique.

La force à rupture de l'élément de renfort est supérieure ou égale à 30 daN, de préférence supérieure ou égale à 35 daN. Plus la force à rupture est élevée, meilleure est sa résistance aux agressions, notamment aux agressions de type « road hazard » comprenant par exemple les nids de poule et les chocs de trottoir. La force à rupture, mesurée selon la norme ASTM D 885/D 885MA de janvier 2010, peut être déterminée aussi à partir d'éléments de renfort écrus, c'est-à-dire dépourvus de colle qu'aux éléments de renfort encollés, c'est-à-dire recouverts d'une couche de colle. Dans le cas des éléments de renfort encollés, la détermination peut être effectuée indifféremment aussi bien aux éléments de renfort issus directement de fabrication qu'aux éléments de renfort extraits de produit semi-fini ou de pneumatique.

L'invention a pour autre objet, un produit semi-fini comprenant un élément de renfort tel que défini ci-dessus noyé dans une matrice d'élastomère. Un exemple de produit semi-fini conforme à l'invention est une nappe d'éléments de renfort comprenant les éléments de renfort noyés dans une matrice d'élastomère formée par calandrage des éléments de renfort entre deux bandes de d'élastomère.

L'invention a également pour objet un pneumatique comprenant au moins un élément de renfort tel que défini ci-dessus.

Les pneumatiques de l'invention, en particulier, peuvent être destinés à des véhicules à moteur du type tourisme, 4x4, "SUV" (Sport Utility Vehicles), mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, autres véhicules de transport ou de manutention.

De préférence, les pneumatiques peuvent être destinés à des véhicules à moteur du type tourisme, 4x4, "SUV" (Sport Utility Vehicles).

Dans un mode de réalisation, le pneumatique comprenant deux bourrelets comportant chacun au moins une structure annulaire de renfort et une armature de carcasse ancrée dans chacun des bourrelets par un retournement autour de la structure annulaire de renfort, l'armature de carcasse comprend au moins un élément de renfort tel que défini ci-dessus.

Dans un autre mode de réalisation, le pneumatique comprenant deux bourrelets comportant chacun au moins une structure annulaire de renfort et une armature de carcasse ancrée dans chacun des bourrelets par un retournement autour de la structure annulaire de renfort, le pneumatique comprenant une armature de sommet disposée radialement extérieure à l'armature de carcasse, l'armature de sommet comprenant une armature de travail et une armature de frettage disposée radialement extérieure à l'armature de travail, l'armature de frettage comprend au moins un élément de renfort tel que défini ci-dessus.

De préférence, la nappe de frettage comprend les éléments de renfort textiles de frettage tel que défini ci-dessus et sensiblement parallèles les uns aux autres. De tels éléments de renfort de frettage forment un angle au plus égal à 10°, de préférence allant de 5° à 10° avec la direction circonférentielle du pneumatique.

Dans encore un autre mode de réalisation, le pneumatique comprenant deux bourrelets comportant chacun au moins une structure annulaire de renfort et une armature de carcasse ancrée dans chacun des bourrelets par un retournement autour de la structure annulaire de renfort, le pneumatique comprenant une armature de renfort de flanc, l'armature de renfort de flanc comprend au moins un élément de renfort tel que défini ci-dessus.

Dans un mode de réalisation particulièrement avantageux, le pneumatique est adapté pour un roulage à plat.

En effet, depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs, (parfois désignés par les appellations commerciales en langue anglaise « ZP » pour « zero pressure » ou « SST » pour « self supporting tire »).

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Etendu), est requise par la législation ou par les constructeurs automobiles pour permettre au manufacturier de présenter le pneumatique comme adapté pour le roulage à plat. Cette performance est largement tributaire de l'endurance des éléments de renfort de l'armature de carcasse, endurance avantageusement élevée grâce aux éléments de renfort selon l'invention.

L'invention est particulièrement avantageuse dans le cas d'un élément de renfort dans lequel le brin haut module est constitué de monofilaments en aramide et le brin bas module est constitué de monofilament en polyester. En effet, l'élément de renfort présente un module relativement faible aux faibles déformations (en mode roulage normal), en l'espèce celui du polyester, qui s'avère suffisant pour assurer les performances RMG. L'élément de renfort présente un module relativement élevé aux fortes déformations (en mode roulage à plat), en l'espèce celui de l'aramide, qui s'avère suffisant pour assurer, à lui seul, la performance RME.

Un tel pneumatique adapté pour un roulage à plat comprend de préférence un insert de flanc disposé axialement à l'intérieur de l'armature de carcasse.

Avantageusement, l'armature de carcasse comprend une seule nappe de carcasse.

La présence d'une seule nappe de carcasse permet d'obtenir un pneumatique dont l'armature de carcasse est plus souple qu'un pneumatique dont l'armature de carcasse comprendrait deux nappes de carcasse. Ainsi, on réduit la raideur verticale du pneumatique et on améliore le confort de ce dernier, le rapprochant ainsi, dans le cas d'un pneumatique adapté pour le roulage à plat, du confort d'un pneumatique standard dépourvu de flancs autoporteurs.

Un autre objet de l'invention est un procédé de fabrication d'un élément de renfort tel que décrit ci-dessus, dans lequel :

- on obtient le brin de monofilaments textiles à haut module avec une torsion initiale R1' selon une direction D1',
- on obtient le brin de monofilaments textiles à bas module avec une torsion initiale R2' selon une direction D2',
- on enroule les brins de monofilaments textiles à haut et bas module l'un autour de l'autre selon une direction D3 avec une torsion R3 de sorte que :

   - le brin de monofilaments textiles à haut module présente une torsion résiduelle R1 selon une direction D1, et
   - le brin de monofilaments textiles à bas module présente une torsion résiduelle R2 selon une direction D2,

- les torsions résiduelles R1 et R2 étant telles que :

   - R1>R2 dans le cas où R2 est sensiblement non-nulle
   - R1est sensiblement non nulle dans le cas où R2 est sensiblement nulle.

Dans un mode de réalisation préféré, R1'<R2'.

Dans un mode de réalisation préféré, R1'<R3.

De préférence, D1' et D2' sont identiques.

Avantageusement. D3 est opposée à D1' et D2'.

De préférence, R1'<R3 et R2'<R3.

L'invention sera mieux comprise à la lecture de la description qui va suivre, donnée uniquement à titre d'exemple non limitatif et faite en se référant aux dessins dans lesquels:

- la figure 1 est une vue en coupe radiale d'un pneumatique adapté pour un roulage à plat selon un premier mode de réalisation de l'invention;
- la figure 2 illustre une vue de détails d'un élément de renfort du pneumatique de la figure 1 ;
- les figures 3 et 4 sont des vues analogues à celle de la figure 1 de pneumatiques respectivement selon des deuxièmes et troisièmes modes de réalisation ; et
- la figure 5 représente des courbes force-allongement de différents éléments de renfort.

Dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Enfin, par « coupe radiale » ou « section radiale » on entend ici une coupe ou une section selon un plan qui comporte l'axe de rotation du pneumatique.

Une direction « axiale » est une direction parallèle à l'axe de rotation du pneumatique. Un point E est dit « axialement intérieur » à un point F (ou «axialement à l'intérieur » du point F) s'il est plus près du plan médian du pneumatique que le point F. Inversement, un point G est dit « axialement extérieur à » un point H (ou « axialement à l'extérieur » du point H) s'il est plus éloigné du plan médian du pneumatique que le point H.

Le « plan médian » du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

## EXEMPLES DE PNEUMATIQUE SELON L'INVENTION

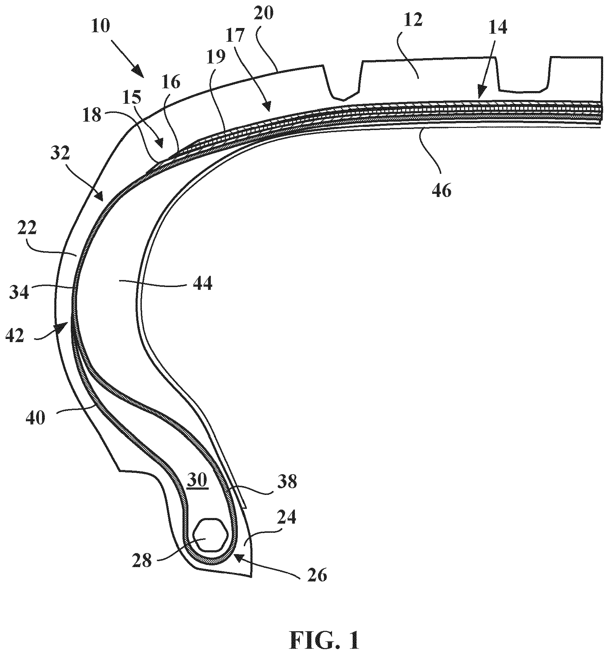

On a représenté schématiquement sur la figure 1, vue en coupe radiale, un pneumatique selon un premier mode de réalisation de l'invention désigné par la référence générale 10. Le pneumatique 10 est du type pour roulage à plat. Le pneumatique 10 est pour véhicule de tourisme.

Ce pneumatique 10 comporte un sommet 12 comprenant une armature de sommet 14 comprenant une armature de travail 15 comprenant deux nappes de travail 16, 18 et une armature de frettage 17 comprenant une nappe de frettage 19. L'armature de sommet 14 est surmontée d'une bande de roulement 20. Ici, l'armature de frettage 17 est disposée radialement extérieure à l'armature de travail 15. L'armature de frettage 17 est radialement intercalée entre l'armature de travail 15 et la bande de roulement 20. Deux flancs autoporteurs 22 prolongent le sommet 12 radialement vers l'intérieur.

Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage sur tringle, ainsi qu'une armature de carcasse radiale 32.

L'armature de carcasse 32 comporte de préférence une seule nappe de carcasse 34 d'éléments de renfort 36, l'armature de carcasse 32 étant ancrée dans chacun des bourrelets 24 par un retournement autour de structure annulaire de renfort 26, de manière à former dans chaque bourrelet 24 un brin aller 38 s'étendant depuis les bourrelets à travers les flancs vers le sommet, et un brin retour 40, l'extrémité radialement extérieure 42 du brin retour 40 étant sensiblement à mi-hauteur du pneumatique. L'armature de carcasse 32 s'étend depuis les bourrelets 24 à travers les flancs 22 vers le sommet 12. L'armature de sommet 14 est disposée radialement extérieure à l'armature de carcasse 32. Ainsi, l'armature de sommet 14 est radialement intercalée entre l'armature de carcasse 32 et la bande de roulement 20.

Les compositions de caoutchouc utilisées pour les nappes de sommet 16, 18 et de carcasse 34 sont des compositions conventionnelles pour calandrage d'éléments de renfort, typiquement à base de caoutchouc naturel, de noir de carbone, d'un système de vulcanisation et des additifs usuels. L'adhésion entre l'élément de renfort textile et la composition de caoutchouc qui l'enrobe est assurée par exemple par une colle usuelle du type RFL.

Le pneumatique 10 comporte encore deux inserts de flanc 44 disposés axialement à l'intérieur à l'armature de carcasse 32. Ces inserts 44 avec leur section radiale caractéristique en forme de croissant sont destinés à renforcer le flanc. Ils comprennent au moins une composition polymérique, de préférence un mélange caoutchouteux. Le document WO 02/096677 donne plusieurs exemples de mélanges caoutchouteux pouvant être utilisés pour former un tel insert. Chaque insert de flanc 44 est susceptible de contribuer à supporter une charge correspondant à une partie du poids du véhicule lors d'une situation de roulage à plat.

Le pneumatique comprend également une couche interne 46 d'étanchéité, de préférence en butyl, située axialement intérieure aux flancs 22 et radialement intérieure à l'armature de sommet 14 et s'étendant entre les deux bourrelets 24. Les inserts de flanc 44 sont situés axialement extérieurs à la couche interne 46. Ainsi, les inserts de flanc 44 sont disposés axialement entre l'armature de carcasse 32 et la couche interne 46.

La nappe de frettage 19 comprend des éléments de renfort textiles de frettage 36 selon l'invention formant un angle au plus égal à 10°, de préférence allant de 5° à 10° avec la direction circonférentielle Z du pneumatique 10. En variante, des éléments de renforts non conformes à l'invention pourraient être utilisés. De tels éléments de renforts comprennent par exemple deux brins de monofilaments textiles réalisés dans un matériau thermorétractile, par exemple ici en polyamide 66, chaque brin consistant en deux filés de 140 tex qui ont été retordus ensemble (sur câbleuse directe) à 250 tours/mètre.

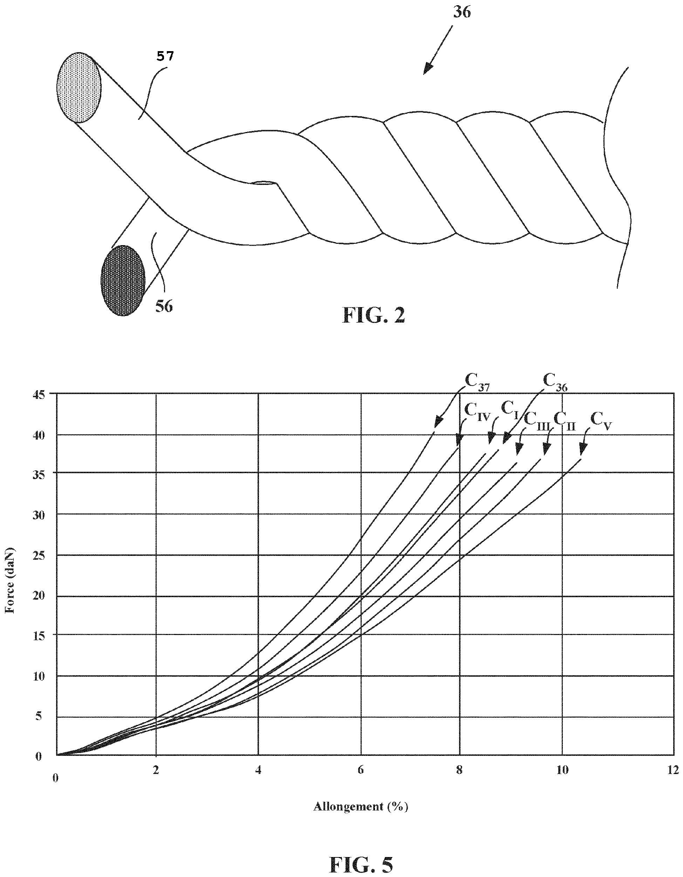

La nappe de carcasse 34 comprend des éléments de renforts textiles 36 selon l'invention dont un est illustré sur la figure 2. Les éléments de renforts 36 sont parallèles les uns aux autres. Chaque élément de renfort 36 est radial. En d'autres termes, chaque élément de renfort 36 s'étend dans un plan sensiblement parallèle aux directions axiale et radiale du pneumatique 10.

Chaque élément de renfort 36 comprend un unique brin 57 de monofilaments textiles à haut module, ici en polyamide aromatique, par exemple en aramide, et un unique brin 56 de monofilaments textiles à bas module, ici en polyester ou en polyamide aliphatique, par exemple en polyester, enroulés en hélice l'un autour de l'autre selon une direction D3 avec une torsion R3. Chaque élément de renfort 36 est constitué d'un brin 57 et d'un brin 56.

Ici, la direction D3 est la direction S. La torsion R3 de l'élément de renfort 56 va de 200 à 450 tours par mètre, de préférence de 250 à 400 tours par mètre, plus préférentiellement de 280 à 400 tours par mètre et ici R3=340 tours par mètre.

Le polyester est choisi parmi le polyéthylène téréphtalate, le polyéthylène naphthalate, le polybutylène téréphthalate, le polybutylène naphthalate, le polypropylène téréphthalate ou le polypropylène naphthalate. En l'espèce, le polyester est du polyéthylène téréphtalate (PET).

Le titre T1 du brin 57 de monofilaments à haut module va de 90 à 400 tex, de préférence de 100 à 350 tex et plus préférentiellement de 140 à 210 tex. Ici, T1=167 tex. Le titre T2 du brin 56 de monofilaments à bas module va de 80 à 350 tex, de préférence de 90 à 290 tex et plus préférentiellement de 120 à 190 tex. Ici, T2=144 tex.

Le brin 57 de monofilaments à haut module présente une torsion résiduelle R1 sensiblement non nulle selon la direction D1. Le brin 56 de monofilaments à bas module présente une torsion résiduelle R2 selon la direction D2. Conformément à l'invention, R1>R2 dans le cas où R2 est sensiblement non-nulle et R1 est sensiblement non nulle dans le cas où R2 est sensiblement nulle.

La torsion résiduelle R1 du brin 54-57 de monofilaments à haut module va de 10 à 150 tours par mètre, de préférence de 20 à 120 tours par mètre et plus préférentiellement de 50 à 110 tours par mètre. Ici, R1=100 tours par mètre.

La torsion résiduelle R2 du brin 56 de monofilaments à bas module va de 10 à 100 tours par mètre, de préférence de 15 à 75 tours par mètre et plus préférentiellement de 20 à 60 tours par mètre de sorte que la condition R1>R2 ou R1>0 soit vérifiée selon que R2 est sensiblement non-nulle ou nulle. Ici, R2=50 tours par mètre.

Ici, R2 étant sensiblement non nulle, D1 et D2 sont identiques. Préférentiellement, D1, D2 et D3 sont identiques et sont ici la direction S.

Dans le cas où R2 est sensiblement nulle, D1 et D3 sont identiques.

Le rapport R1/R3 va de 0,05 à 0,45, de préférence de 0,10 à 0,40, préférentiellement de 0,13 à 0,40, plus préférentiellement de 0,13 à 0,36 et encore plus préférentiellement de 0,20 à 0,35. Ici R1/R3=0,29.

Le produit R1.R3 est supérieur ou égal à 3000, de préférence à 15000, préférentiellement à 30000. Ici R1.R3=34000. Dans d'autres modes de réalisation, on a R1.R3 supérieur ou égal à 44000. Le produit R1.R3 est inférieur ou égal à 48000.

L'élément de renfort 36 est tel que le rapport R3/R2 et la valeur de R3 vérifient R3/R2 va de 0,10 à 10,50 et R3 va de 200 à 450 tours par mètre, de préférence R3/R2 va de 2,00 à 8,25 et R3 va de 250 à 400 tours par mètre, préférentiellement R3/R2 va de 2,00 à 7,10 et R3 va de 280 à 400 tours par mètre. Encore plus préférentiellement, R3/R2 et R3 vérifient R3/R2 va de 3,20 à 8,75 et R3 va de 235 à 375 tours par mètre. Ici, R3/R2=6,80 pour R3=340 tours par mètre.

En outre, l'élément de renfort 36 est tel que le rapport R1/R2 va de 1,90 à 10,00, de préférence de 1,90 à 5,00 et plus préférentiellement de 1,90 à 2,50. Ici, R1/R2=2,00.

L'élément de renfort 36 présente un facteur de torsion K allant de 130 à 200, de préférence de 140 à 190. Ici K=160.

Le module final Mf1 du brin 57 de monofilaments textiles à haut module est supérieur ou égal à 30 cN/tex, de préférence à 35 cN/tex et plus préférentiellement à 40 cN/tex. Ici, Mf1=64,5 cN/tex.

Le module final Mf2 du brin 56 de monofilaments textiles à bas module est inférieur ou égal à 20 cN/tex, de préférence à 15 cN/tex et plus préférentiellement à 10 cN/tex. Ici, Mf2=7,1 cN/tex.

Le rapport Mf1/Mf2 du module final du brin 57 de monofilaments textiles à haut module sur le module final du brin 56 de monofilaments textiles à bas module est supérieur ou égal à 2, de préférence à 5 et plus préférentiellement à 7. De préférence, Mf1/Mf2 est inférieur ou égal à 15 et de préférence à 10. Ici, Mf1/Mf2=9,1.

La force à rupture de l'élément de renfort 36 est supérieure ou égale à 30 daN, de préférence supérieure ou égale à 35 daN. Ici, Fr=37,5 daN sur l'élément de renfort 36 revêtu d'une couche de colle, par exemple une couche de colle de type RFL et Fr=38,1 daN sur l'élément de renfort 36 écru dépourvu de couche colle.

Les valeurs décrites ci-dessus sont mesurées sur des éléments de renfort directement fabriqués. En variante, les valeurs décrites ci-dessus sont mesurées sur des éléments de renfort extraits d'un produit semi-fini ou d'un pneumatique.

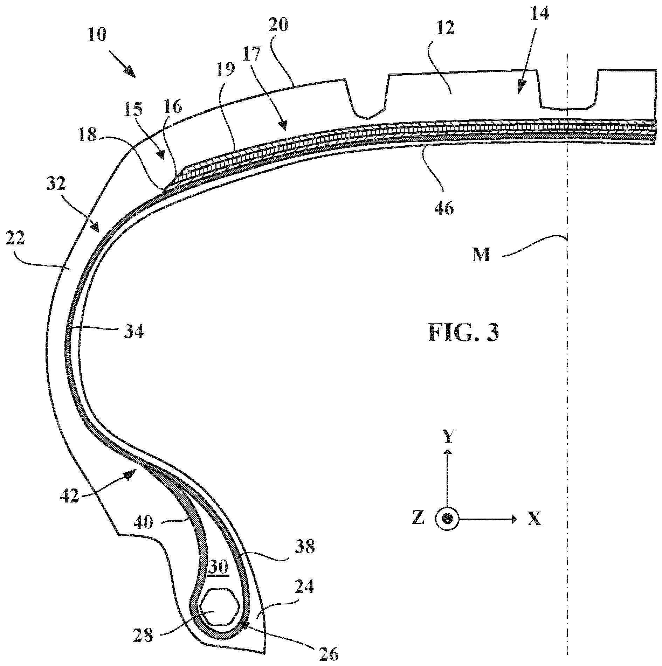

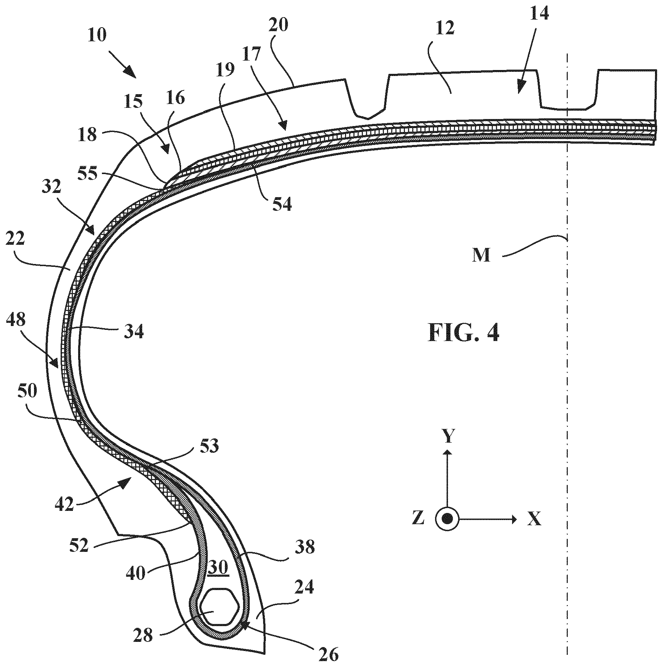

On a représenté sur les figures 3 et 4, des pneumatiques respectivement selon des deuxième et troisième modes de réalisation de l'invention. Les éléments analogues à ceux du premier mode de réalisation sont désignés par des références identiques.

A la différence du pneumatique 10 du premier mode de réalisation, le pneumatique 10 selon le deuxième mode de réalisation de la figure 3 n'est pas adapté pour un roulage à plat. Ainsi, il est dépourvu des inserts de flancs 44.

Dans une variante, le pneumatique 10 du deuxième mode de réalisation comprend des éléments de renforts de frettage conformes à l'invention. Dans une autre variante, le pneumatique 10 du deuxième mode de réalisation comprend des éléments de renforts de frettage non conformes à l'invention.

A la différence du pneumatique du deuxième mode de réalisation, le pneumatique 10 selon le troisième mode de réalisation de la figure 4 comprend une armature de renfort de flanc 48 comprenant de préférence une unique nappe 50 de renfort de flanc.

L'armature de renfort de flanc 48 est agencée axialement à l'extérieur du brin aller 38 et s'étend, dans chaque bourrelet 24, axialement à l'extérieur du brin retour 40 de la nappe de carcasse 34. En variante, l'armature de renfort de flanc 48 peut être agencée radialement entre le brin aller 38 et le brin retour 40 de la nappe de carcasse 34.

L'extrémité 52 radialement intérieure de l'armature de renfort de flanc 48 est radialement à l'intérieur de l'extrémité 53 radialement extérieure du brin retour 40 de l'armature de carcasse 32. L'extrémité 54 radialement extérieure de l'armature de renfort de flanc 25 est axialement à l'intérieur de l'extrémité 55 axialement extérieure de la nappe de sommet radialement adjacente à l'armature de renfort de flanc 48, ici la nappe de travail 18 radialement la plus à l'intérieur. D'autres configurations des extrémités 52 et 54 par rapport aux extrémités 53 et 55 sont possibles et par exemple décrites dans WO2014040976.

Dans ce troisième mode de réalisation, l'armature de renfort de flanc comprend des éléments de renfort conformes à l'invention.

On pourra également imaginer un pneumatique selon le troisième mode de réalisation comprenant des éléments de renfort de frettage conformes ou non à l'invention et des éléments de renfort de carcasse conformes ou non à l'invention.

## PROCEDE DE FABRICATION DE L'ELEMENT DE RENFORT

On va maintenant décrire un procédé de fabrication d'un élément de renfort 36. Le procédé selon l'invention peut être mis en œuvre avec des métiers à anneaux bien connus de l'homme du métier mais également sur des câbleuses directes.

Dans une étape d'obtention du brin 57 de monofilaments textiles à haut module, on part d'un filé de monofilaments textiles à haut module et on retord ce filé selon une direction D1' avec une torsion initiale R1'. On obtient le brin 57.

Dans une autre étape cette fois-ci d'obtention du brin 56 de monofilaments textiles à bas module, on part d'un filé de monofilaments textiles à bas module et on retord ce filé selon une direction D2' avec une torsion initiale R2'. On obtient le brin 56.

Chaque filé (en anglais « *yarn* »), à l'état initial c'est-à-dire dépourvu de torsion ; de manière bien connue, est formé d'une pluralité de monofilaments textiles élémentaires, typiquement plusieurs dizaines à plusieurs centaines, de diamètre très fin généralement inférieur à 25 μm. Au sein de chaque brin '57', 56', les monofilaments textiles élémentaires se voient ainsi imposés une déformation en hélice autour de l'axe du brin fibre.

D1' et D2' sont identiques et ici sont la direction Z. De plus, R1'<R2' avec ici R1'=240 tours par mètre et R2'=290 tours par mètre.

Puis, on enroule les brins 57, 56 de monofilaments textiles à haut et bas module l'un autour de l'autre selon une direction D3 avec une torsion R3 de sorte que d'une part, le brin de monofilaments textiles à haut module présente une torsion résiduelle R1, ici sensiblement non nulle, selon une direction D1, et d'autre part, le brin de monofilaments textiles à bas module présente une torsion résiduelle R2 selon une direction D2. Les torsions résiduelles R1 et R2 sont telles que R1>R2 dans le cas où R2 est sensiblement non-nulle et R1 est sensiblement non nulle dans le cas où R2 est sensiblement nulle. En l'espèce, dans l'exemple de l'élément de renfort 36, R1>R2.

A cet effet, on enroule les brins 57, 56 avec une torsion R3 telle que R1'<R3 et R2'<R3 et avec ici R3=340 tours par mètre dans la direction D3 opposée aux directions D1' et D2'.

**MESURES ET TESTS COMPARATIFS**

On a comparé dans le tableau 1 des caractéristiques de l'élément de renfort 36 selon l'invention, d'un autre élément de renfort 37 selon l'invention, et d'autres éléments de renfort formant des exemples comparatifs. Pour tous ces éléments de renforts, T1=167 tex et T2=144 tex. Le PET est commercialisé par la société Hyosung sous la dénomination HSP40 NAA. L'aramide est commercialisée par la société Teijin sous la dénomination Twaron 1000.

Les forces à ruptures, déterminées selon la norme ASTM D 885/D 885MA de janvier 2010, sont mesurées à 20°C sur des éléments de renfort écrus (c'est-à-dire non encollés) qui ont été soumis à un conditionnement préalable. Par "conditionnement préalable", on entend le stockage des éléments de renfort (après séchage) pendant au moins 24 heures, avant mesure, dans une atmosphère standard selon la norme européenne DIN EN 20139 (température de 20 $\pm$ 2°C ; hygrométrie de 65 $\pm$ 2 %).

Le titre (ou densité linéaire) des brins élémentaires ou des éléments de renfort est déterminé selon la norme ASTM D1423. Le titre est donné en tex (poids en grammes de 1000 m de produit - rappel: 0, 111 tex égal à 1 denier).

L'endurance est déterminée en conduisant un test d'endurance en flexion conforme à la norme ASTM D430-06 (Méthode A) au cours duquel on fait réaliser un mouvement de va-et-vient à un produit semi fini comprenant plusieurs éléments de renforts noyés dans une matrice d'élastomère au contact d'une poulie. A l'issue de 600,000 cycles, on extrait les éléments de renforts de la matrice d'élastomère et on mesure la force à rupture Ft. On compare cette force à rupture Ft à la force à rupture Fr avant le test d'endurance en flexion. La déchéance en % Dt est donnée par la relation différence (1-Ft/Fr).100 et l'endurance est donnée par la relation 100.Ft/Fr et est reportée dans le tableau .

On a représenté sur la figure 5 les courbes Force-Allongement $C_I$ à $C_V$, $C_{36}$ et $C_{37}$ de différents éléments de renforts comparatifs I à V, 36 et 37 selon l'invention.

**Tableau 1**

|  | I | II | III | IV | V | 36 | 37 |
|---|---|---|---|---|---|---|---|
| Courbe | $C_I$ | $C_{II}$ | $C_{III}$ | $C_{IV}$ | $C_V$ | $C_{36}$ | $C_{37}$ |
| R1' (t.m$^{-1}$)/D1' | 290/Z | 290/Z | 240/Z | 240/Z | 340/Z | 240/Z | 240/Z |
| R2' (t.m$^{-1}$)/D2' | 290/Z | 290/Z | 240/Z | 240/Z | 340/Z | 290/Z | 290/Z |
| R1 (t.m$^{-1}$)/D1 | 0/S | 50/S | 100/S | 50/S | 0/S | 100/S | 50/S |
| R2 (t.m$^{-1}$)/D2 | 0/S | 50/S | 100/S | 50/S | 0/S | 50/S | 0/S |
| R3 (t.m$^{-1}$)/D3 | 290/S | 340/S | 340/S | 290/S | 340/S | 340/S | 290/S |
| Facteur de torsion | 136 | 160 | 160 | 136 | 160 | 160 | 136 |
| Endurance | 100 | NM | NM | 94 | >100 | 170 | 100 |
| Force à rupture (daN) | 38,3 | 36,6 | 36,5 | 38,3 | 36,8 | 38,1 | 39,8 |

La mention NM indique que la valeur n'a pas été mesurée.

La comparaison des éléments de renforts I et V illustre l'effet connu de la torsion R3 sur la force à rupture et l'endurance évoqué dans le préambule de la présente demande. En passant de R3=290 t.m$^{-1}$ (I) à R3=340 t.m$^{-1}$ (VI), on améliore l'endurance mais on diminue la force à rupture de l'élément de renfort.

La comparaison des éléments de renforts I, II et III montre que deux torsions résiduelles R1, R2 telles que R1=R2 ne permettent pas de compenser la perte de force à rupture lié à l'augmentation de la torsion R3 de l'élément de renfort.

La comparaison des éléments de renforts I et IV montre que deux torsions résiduelles R1, R2 telles que R1=R2 en maintenant une torsion R3 identique à l'élément de renfort I entrainent un maintien de la force à rupture mais toutefois une diminution de l'endurance.

La comparaison des éléments de renforts I et 36 montre que, conformément à l'invention, deux torsions résiduelles R1, R2 avec R1 telles que R1>R2 permettent d'obtenir à la fois une force à rupture équivalente à celle du témoin I et une endurance très nettement améliorée par rapport à celle du témoin I en raison d'une torsion R3=340 t.m$^{-1}$ supérieure à celle du témoin (R3=290 t.m$^{-1}$).

La comparaison des éléments de renforts I et 37 montre que, conformément à l'invention, deux torsions résiduelles R1, R2 avec R1 telle que R1>R2 permettent d'obtenir à la fois une endurance équivalente par rapport à celle du témoin I et une fois une force à rupture améliorée en raison d'une torsion égale à celle du témoin I (R3=290 t.m⁻¹).

La comparaison des éléments de renfort IV et 37 montre que, pour une même torsion R3=290 t.m⁻¹, les deux torsions résiduelles R1, R2 sensiblement non nulles telles que R1=R2 de l'élément de renfort IV entrainent une baisse de l'endurance par rapport au témoin I contrairement à l'élément de renfort 37 dans lequel, pour cette même torsion R3=290 t.m⁻¹, R1>R2 permet d'améliorer la force à rupture sans réduire l'endurance.

L'invention ne se limite pas aux modes de réalisation précédemment décrits.

En effet, l'armature de carcasse 32 du pneumatique pourra comprendre deux nappes de carcasse 34.

On pourra également prévoir un mode de réalisation dans lequel le brin retour 40 remonte entre la nappe de sommet 18 et le brin aller 38.

On pourra également combiner les caractéristiques des différents modes de réalisation décrits ou envisagés ci-dessus sous réserve que celles-ci soient compatibles entre elles.

**Revendications**

1. Elément de renfort (36) comprenant un unique brin (57) de monofilaments textiles à haut module et un unique brin (56) de monofilaments textiles à bas module, enroulés l'un autour de l'autre selon une direction D3 avec une torsion R3, par brin de monofilaments textiles à haut module, on entend un brin présentant un module dit final strictement supérieur à 25 cN/tex et par brin de monofilaments textiles à bas module, on entend un brin présentant un module dit final inférieur ou égal à 25 cN/tex, le brin (57) de monofilaments textiles à haut module présentant une torsion résiduelle R1 selon la direction D1, le brin (56) de monofilaments textiles à bas module présentant une torsion résiduelle R2 selon la direction D2, les torsions résiduelles R1 et R2 étant telles que :

   - R1>R2 dans le cas où R2 est supérieure ou égale à 2,5% de la torsion R3 ;
   - R1 est supérieure ou égale à 2,5% de la torsion R3 dans le cas où R2 est strictement inférieure à 2,5% de la torsion R3 ;

   dans lequel la torsion R3 va de 200 à 450 tours par mètre et le rapport R1/R3 va de 0,05 à 0,45.

2. Elément de renfort (36) selon la revendication 1, dans lequel, dans le cas où R2 est supérieure ou égale à 2,5% de la torsion R3, les directions D1 et D2 sont identiques.

3. Elément de renfort (36) selon l'une quelconque des revendications précédentes, dans lequel :

   - les directions D1, D2 et D3 sont identiques dans le cas où R2 est supérieure ou égale à 2,5% de la torsion R3,
   - les directions D1 et D3 sont identiques dans le cas où R2 est strictement inférieure à 2,5% de la torsion R3.

4. Elément de renfort (36) selon l'une quelconque des revendications précédentes, dans lequel-:

   - les monofilaments textiles à haut module sont en polyamide aromatique; et
   - les monofilaments à bas module sont en polyesters. À brins de monofilaments haut module et bas module pondérée par les titres respectifs T1 et T2 de ces brins : $\rho3 = (\rho1.T1 + \rho2.T2)/(T1 + T2)$ en g/cm³, avec K allant de 130 à 200, de préférence de 140 à 190.

5. Elément de renfort (36) selon l'une quelconque des revendications précédentes, dans lequel R3 va de 250 à 400 tours par mètre et de préférence de 280 à 400 tours par mètre.

6. Elément de renfort (36) selon l'une quelconque des revendications précédentes, présentant un facteur de torsion K défini par la relation :

$$K = R3 \times [\, T3 / (1000.\rho3)]^{1/2}$$

   dans laquelle la torsion R3 est exprimée en tours par mètre, le titre ' T3 = T1 + T2 est exprimé en tex, et ρ3 est une moyenne des densités ρ1 et ρ2 des λ

7. Elément de renfort (36) selon l'une quelconque des revendications précédentes, dans lequel R1 va de 10 à 150 tours par mètre, de préférence de 20 à 120 tours par mètre et plus préférentiellement de 50 à 110 tours par mètre.

8. Elément de renfort (36) selon l'une quelconque des revendications précédentes, dans lequel, dans le cas où R2 est supérieure ou égale à 2,5% de la torsion R3, R2 va de 10 à 100 tours par mètre, de préférence de 15 à 75 tours par mètre et plus préférentiellement de 20 à 60 tours par mètre.

9. Elément de renfort (36) selon l'une quelconque des revendications précédentes, dans lequel le rapport R1/R3 va de 0,10 à 0,40, de préférence de 0,13 à 0,40, préférentiellement de 0,13 à 0,36 et plus préférentiellement de 0,20 à 0,35.

10. Elément de renfort (36) selon l'une quelconque des revendications précédentes, dans lequel le rapport R3/R2 et R3 vérifient R3/R2 va de 0,10 à 10,50 et R3 va de 200 à 450 tours par mètre, de préférence R3/R2 va de 2,00 à 8,25 et R3 va de 250 à 400 tours par mètre, préférentiellement R3/R2 va de 2,00 à 7,10 et R3 va de 280 à 400 tours par mètre.

11. Elément de renfort (36) selon l'une quelconque des revendications précédentes, dans lequel le rapport R1/R2 va de 1,90 à 10,00, de préférence de 1,90 à 5,00 et plus préférentiellement de 1,90 à 2,50.

12. Elément de renfort (36) selon l'une quelconque des revendications précédentes, dans lequel-:

- le titre T1 du brin (57) de monofilaments textiles à haut module va de 90 à 400 tex, de préférence de 100 à 350 tex et plus préférentiellement de 140 à 210 tex; et
- le titre T2 du brin (56) de monofilaments textiles à bas module va de 80 à 350 tex, de préférence de 90 à 290 tex et plus préférentiellement de 120 à 190 tex.

13. Pneumatique (10), **caractérisé en ce qu'**il comprend au moins un élément de renfort (36) selon l'une quelconque des revendications 1 à 4512.

14. Pneumatique (10) comprenant deux bourrelets (24) comportant chacun au moins une structure annulaire de renfort (26) et une armature de carcasse (32) ancrée dans chacun des bourrelets (24) par un retournement autour de la structure annulaire de renfort (26), **caractérisé en ce que** l'armature de carcasse (32) comprend au moins un élément de renfort (36) selon l'une quelconque des revendications 1 à 4512.

15. Procédé de fabrication d'un élément de renfort (36) selon l'une quelconque des revendications 1 à 4512, dans lequel :

- on obtient le brin (5457) de monofilaments textiles à haut module avec une torsion initiale R1' selon une direction D1',
- on obtient le brin (56) de monofilaments textiles à bas module avec une torsion initiale R2' selon une direction D2',
- on enroule les brins (5457, 56) de monofilaments textiles à haut et bas module l'un autour de l'autre selon une direction D3 avec une torsion R3 de sorte que :

   - le brin (5457) de monofilaments textiles à haut module présente une torsion résiduelle R1 selon une direction D1, et
   - le brin (56) de monofilaments textiles à bas module présente une torsion résiduelle R2 selon une direction D2,

   - les torsions résiduelles R1 et R2 étant telles que :

      - R1>R2 dans le cas où R2 est supérieure ou égale à 2,5% de la torsion R3
      - R1 est supérieure ou égale à 2,5% de la torsion R3 dans le cas où R2 est est strictement inférieure à 2,5% de la torsion R3.

**Patentansprüche**

1. Verstärkungselement (36), umfassend einen einzigen Faden (57) aus hochmoduligen textilen Monofilamenten und einen einzigen Faden (56) aus niedrigmoduligen textilen Monofilamenten, die entlang einer Richtung D3 mit einer Torsion R3 umeinander gewickelt sind, wobei unter einem Faden aus hochmoduligen textilen Monofilamenten ein Faden verstanden wird, der einen sogenannten Endmodul strikt größer als 25 cN/tex aufweist, und unter einem Faden aus niedrigmoduligen textilen Monofilamenten ein Faden verstanden wird, der einen sogenannten Endmodul kleiner oder gleich 25 cN/tex aufweist, wobei der Faden (57) aus hochmoduligen textilen Monofilamenten eine Resttorsion R1 entlang der Richtung D1 aufweist, wobei der Faden (56) aus niedrigmoduligen textilen Monofilamenten eine Resttorsion R2 entlang der Richtung D2 aufweist, wobei die Resttorsionen R1 und R2 derart sind, dass:

- R1 > R2, wenn R2 größer oder gleich 2,5 % der Torsion R3 ist;
- R1 größer oder gleich 2,5 % der Torsion R3 ist, wenn R2 strikt kleiner als 2,5 % der Torsion R3 ist;

wobei die Torsion R3 200 bis 450 Touren pro Meter beträgt und der Quotient R1/R3 0,05 bis 0,45 beträgt.

2. Verstärkungselement (36) nach Anspruch 1, bei dem, wenn R2 größer oder gleich 2,5 % der Torsion R3 ist, die Richtungen D1 und D2 identisch sind.

3. Verstärkungselement (36) nach einem der vorhergehenden Ansprüche, bei dem:

- die Richtungen D1, D2 und D3 identisch sind, wenn R2 größer oder gleich 2,5 % der Torsion R3 ist,
- die Richtungen D1 und D3 identisch sind, wenn R2 strikt kleiner als 2,5 % der Torsion R3.

4. Verstärkungselement (36) nach einem der vorhergehenden Ansprüche, bei dem:

- die hochmoduligen textilen Monofilamente aus aromatischem Polyamid sind; und
- die niedrigmoduligen Monofilamente aus Polyestern sind.

5. Verstärkungselement (36) nach einem der vorhergehenden Ansprüche, bei dem R3 250 bis 400 Touren pro Meter und vorzugsweise 280 bis 400 Touren pro Meter beträgt.

6. Verstärkungselement (36) nach einem der vorhergehenden Ansprüche, das einen Torsionsfaktor K aufweist, der definiert ist durch die Gleichung:

$$K = R3 \times [T3 / (1000.\rho3)]^{1/2}$$

worin die Torsion R3 in Touren pro Meter ausgedrückt wird, der Titer T3 = T1 + T2 in tex ausgedrückt wird und ρ3 ein Mittelwert der Dichten ρ1 und ρ2 der Fäden aus hochmoduligen und niedrigmoduligen Monofilamenten ist, der durch die jeweiligen Titer T1 und T2 dieser Fäden gewichtet ist: $\rho3 = (\rho1.T1 + \rho2.T2)/(T1+ T2)$ in g/cm$^3$, wobei K 130 bis 200, vorzugsweise 140 bis 190 beträgt.

7. Verstärkungselement (36) nach einem der vorhergehenden Ansprüche, bei dem R1 10 bis 150 Touren pro Meter, vorzugsweise 20 bis 120 Touren pro Meter und noch bevorzugter 50 bis 110 Touren pro Meter beträgt.

8. Verstärkungselement (36) nach einem der vorhergehenden Ansprüche, bei dem, wenn R2 größer oder gleich 2,5 % der Torsion R3 ist, R2 10 bis 100 Touren pro Meter, vorzugsweise 15 bis 75 Touren pro Meter und noch bevorzugter 20 bis 60 Touren pro Meter beträgt.

9. Verstärkungselement (36) nach einem der vorhergehenden Ansprüche, bei dem der Quotient R1/R3 0,10 bis 0,40, vorzugsweise 0,13 bis 0,40, bevorzugt 0,13 bis 0,36 und noch bevorzugter 0,20 bis 0,35 beträgt.

10. Verstärkungselement (36) nach einem der vorhergehenden Ansprüche, bei dem für den Quotienten R3/R2 und R3 gilt, dass R3/R2 0,10 bis 10,50 beträgt und R3 200 bis 450 Touren pro Meter beträgt, vorzugsweise R3/R2 2,00 bis 8,25 beträgt und R3 250 bis 400 Touren pro Meter beträgt, bevorzugt R3/R2 2,00 bis 7,10 beträgt und R3 280 bis 400 Touren pro Meter beträgt.

11. Verstärkungselements (36) nach einem der vorhergehenden Ansprüche, bei dem der Quotient R1/R2 1,90 bis 10,00, vorzugsweise 1,90 bis 5,00 und noch bevorzugter 1,90 bis 2,50 beträgt.

12. Verstärkungselement (36) nach einem der vorhergehenden Ansprüche, bei dem:

- der Titer T1 des Fadens (57) aus hochmoduligen textilen Monofilamenten 90 bis 400 tex, vorzugsweise 100 bis 350 tex und noch bevorzugter 140 bis 210 tex beträgt; und
- der Titer T2 des Fadens (56) aus niedrigmoduligen textilen Monofilamenten 80 bis 350 tex, vorzugsweise 90 bis 290 tex und noch bevorzugter 120 bis 190 tex beträgt.

13. Luftreifen (10), **dadurch gekennzeichnet, dass** er mindestens eine Verstärkungselement (36) nach einem der Ansprüche 1 bis 12 umfasst.

14. Luftreifen (10), umfassend zwei Wülste (24), die jeweils mindestens eine ringförmige Verstärkungsstruktur (26) und eine Karkassenbewehrung (32) beinhalten, die in jedem der Wülste (24) durch Umschlagen um die ringförmige Verstärkungsstruktur (26) verankert ist, **dadurch gekennzeichnet, dass** die Karkassenbewehrung (32) mindestens ein Verstärkungselement (36) nach einem der Ansprüche 1 bis 12 umfasst.

15. Verfahren zur Herstellung eines Verstärkungselements (36) nach einem der Ansprüche 1 bis 12, bei dem:

- der Faden (57) aus hochmoduligen textilen Monofilamenten mit einer Ausgangstorsion R1' entlang einer Richtung D1' erhalten wird,
- der Faden (56) aus niedrigmoduligen textilen Monofilamenten mit einer Ausgangstorsion R2' entlang einer Richtung D2' erhalten wird,
- die Fäden (57, 56) aus hochmoduligen und niedrigmoduligen textilen Monofilamenten entlang einer Richtung D3 mit einer Torsion R3 umeinander gewickelt werden, so dass:
- der Faden (57) aus hochmoduligen textilen Monofilamenten eine Resttorsion R1 entlang einer Richtung D1 aufweist, und
- der Faden (56) aus niedrigmoduligen textilen Monofilamenten eine Resttorsion R2 entlang einer Richtung D2 aufweist,
- wobei die Resttorsionen R1 und R2 derart sind, dass:

  - R1 > R2, wenn R2 größer oder gleich 2,5 % der Torsion R3 ist;
  - R1 größer oder gleich 2,5 % der Torsion R3 ist, wenn R2 strikt kleiner als 2,5 % der Torsion R3 ist.

**Claims**

1. Reinforcing element (36) comprising a single strand (57) of high-modulus textile monofilaments and a single strand (56) of low-modulus textile monofilaments which are wound one around the other in a direction D3 with a twist R3, by a high-modulus strand of textile monofilaments is a strand having a so-called final modulus strictly higher than 25 cN/tex and by a low-modulus strand of textile monofilaments is a strand having a so-called final modulus less than or equal to 25 cN/tex, the strand (57) of high-modulus textile monofilaments having a residual twist R1 in the direction D1, the strand (56) of low-modulus textile monofilaments having a residual twist R2 in the direction D2, the residual twists R1 and R2 being such that:

   - R1>R2 when R2 is greater than or equal to 2.5% of the twist R3;
   - R1 is greater than or equal to 2.5% of the twist R3 when R2 is strictly below 2.5% of the twist R3;

   in which R3 ranges from 200 to 450 twists per metre and the ratio R1/R3 ranges from 0.05 to 0.45.

2. Reinforcing element (36) according to Claim 1, in which, when R2 is greater than or equal to 2.5% of the twist R3, the directions D1 and D2 are identical.

3. Reinforcing element (36) according to any one of the preceding claims, in which:

   - the directions D1, D2 and D3 are identical when R2 is greater than or equal to 2.5% of the twist R3,
   - the directions D1 and D3 are identical when R2 is strictly below 2.5% of the twist R3.

4. Reinforcing element (36) according to any one of the preceding claims, in which the high-modulus textile monofilaments are made of aromatic polyamide, and the low-modulus monofilaments are made of polyesters.

5. Reinforcing element (36) according to any one of the preceding claims, in which R3 ranges from 250 to 400 twists per metre, preferably from 280 to 400 twists per metre.

6. Reinforcing element (36) according to any one of the preceding claims, having a twist factor K defined by the following relationship:

$$K = (Twist\ R3) \times [(Count\ T3\ /\ (1000.\rho3)]^{1/2}$$

in which the twist R3 is expressed in twists per metre , the count T3 =T1 + T2 is expressed in tex, and $\rho3$ is a mean of the densities $\rho1$ and $\rho2$ of the high-modulus and low-modulus monofilament strands weighted by the respective counts T1 and T2 of these strands: $\rho3=(\rho1.T1+\rho2.T2)/(T1+T2)$ in g/cm$^3$, with K ranging from 130 to 200, preferably from 140 to 190.

7. Reinforcing element (36) according to any one of the preceding claims, in which R1 ranges from 10 to 150 twists per metre, preferably from 20 to 120 twists per metre, more preferably from 50 to 110 twists per metre.

8. Reinforcing element (36) according to any one of the preceding claims, in which, when R2 is strictly below 2.5% of the twist R3, R2 ranges from 10 to 100 twists per metre, preferably from 15 to 75 twists per metre, more preferably from 20 to 60 twists per metre.

9. Reinforcing element (36) according to any one of the preceding claims, in which the ratio R1/R3 ranges from 0.10 to 0.40, preferably from 0.13 to 0.40, more preferably from 0.13 to 0.36 and more preferably still from 0.20 to 0.35.

10. Reinforcing element (36) according to any one of the preceding claims, in which the ratio R3/R2 and R3 satisfy R3/R2 ranging from 0.10 to 10.50 and R3 ranging from 200 to 450 twists per metre, preferably R3/R2 ranging from 2.00 to 8.25 and R3 ranging from 250 to 400 twists per metre, preferably R3/R2 ranging from 2.00 to 7.10 and R3 ranging from 280 to 400 twists per metre.

11. Reinforcing element (36) according to any one of the preceding claims, in which the ratio R1/R2 ranges from 1.90 to 10.00, preferably from 1.90 to 5.00, and more preferably from 1.90 to 2.50.

12. Reinforcing element (36) according to any one of the preceding claims, in which

 - the count T1 of the high-modulus strand (57) of textile monofilaments ranges from 90 to 400 tex, preferably from 100 to 350 tex, and more preferably from 140 to 210 tex; and;
 - the count T2 of the low-modulus strand (56) of textile monofilaments ranges from 80 to 350 tex, preferably from 90 to 290 tex, and more preferably from 120 to 190 tex.

13. Tyre (10), **characterized in that** it comprises at least one reinforcing element (36) according to any one of Claims 1 to 12.

14. Tyre (10) comprising two beads (24) each comprising at least one annular reinforcing structure (26) and a carcass reinforcement (32) anchored in each of the beads (24) by a turnup around the annular reinforcing structure (26), **characterized in that** the carcass reinforcement (32) comprises at least one reinforcing element (36) according to any one of Claims 1 to 12.

15. Method of manufacturing a reinforcing element (36) according to any one of Claims 1 to 12, in which:

 - the high-modulus strand (57) of textile monofilaments with an initial twist R1' in a direction D1' is obtained;
 - the low-modulus strand (56) of textile monofilaments with an initial twist R2' in a direction D2' is obtained;
 - the high-modulus and low-modulus strands (57, 56) of textile monofilaments are wound one around the other in a direction D3 with a twist R3 so that:

  - the high-modulus strand (57) of textile monofilaments has a residual twist R1 in a direction D1; and
  - the low-modulus strand (56) of textile monofilaments has a residual twist R2 in a direction D2;

 - the residual twists R1 and R2 being such that:

- R1>R2 when R2 is greater than or equal to 2.5% of the twist R3;
- R1 is greater than or equal to 2.5% of the twist R3 when is strictly below 2.5% of the twist R3.

- R1>R2 when R2 is greater than or equal to 2.5% of the twist R3;
- R1 is greater than or equal to 2.5% of the twist R3 when is strictly below 2.5% of the twist R3.

**FIG. 1**

**FIG. 2**

**FIG. 5**

FIG. 3

FIG. 4

## RÉFÉRENCES CITÉES DANS LA DESCRIPTION

**Documents brevets cités dans la description**

- EP 021485 A
- EP 220642 A
- EP 225391 A
- EP 335588 A
- EP 467585 A
- US 3419060 A
- US 3977172 A
- US 4155394 A
- US 5558144 A
- WO 9706294 A
- EP 848767 A
- WO 2012104279 A
- WO 2012146612 A
- WO 2014057082 A
- US 3603071 A
- DE 102008037615
- US 4234030 A
- WO 02096677 A
- WO 2014040976 A